# EUROPEAN PATENT APPLICATION

(11) **EP 4 378 848 A1**
(43) Date of publication of application: **05.06.2024**
(21) Application number: 23210518.9
(22) Date of filing: 17.11.2023
(51) Int. Cl.: B65D 1/02, B65D 47/12

(54) **A BOTTLE PROVIDED WITH A CAP**

(30) Priority: 30.11.2022 IT 202200024681
(71) Applicant: CB STAMPI S.R.L., 36031 Dueville (VI) (IT)
(72) Inventor: CARRARO, Emanuele, 36031 Dueville (VI) (IT)
(74) Representative: Trentin, Michele

(57) **Abstract**

A bottle provided with a cap (**102**) and comprising a neck (**103**) having a base (**105**) and a collar (**106**) placed near the base (**105**), the cap (**102**) having an exposed external surface (**107**) and an internal portion (**109**) conformed so as to snap-fit to the neck (**103**), the bottle (**101**) being made by blowing and the base (**105**) being enlarged with respect to the neck (**103**) by blowing. The bottle (**101**) also comprises a plurality of shapings (**117**) placed on the base (**105**) and made by blowing, as well as a plurality of counter-shapings (**118**) made on the internal portion (**109**) of the cap (**102**), the shapings (**117**) and counter-shapings (**118**) being conformed so as to come into abutment against each other and allow a centring of the cap (**102**), the cap (**102**) comprising an upper wall (**111**) in which there is at least one through hole (**113**) to allow the escape of a fluid that can be inserted into said bottle (**101**); a perimeter wall (**110**) defining the exposed external surface (**107**) of the cap (**102**), the internal portion (**109**) comprising an internal surface (**114**) of the perimeter wall (**110**); an annular body (**115**) protruding from the upper wall (**111**) of the cap (**102**) towards the inside of the cap (**102**) and conformed so as to realize the snap coupling to the neck (**103**), the plurality of shapings (**117**) and counter-shapings (**118**) comprising material recesses (**125**) adapted to receive protrusions (**126**) emerging from the base (**105**) therein, the material recesses (**125**) being made on the annular body (**115**).

## Description

### Field of application

The present invention is applicable to the packaging sector and, in particular, concerns the packaging of fluids.

More in detail, the present invention refers to a bottle provided with a cap.

### State of the art

In the field of plastic packaging, and in particular of the bottles made by blowing, caps (called *"snap on"*) are known which are suitable to be snap-coupled to bottle necks that are also threaded, that is, also to bottle necks that, typically, accommodate caps provided with counter-threading suitable for screw-coupling.

In particular, the snap-on caps are provided with an internal protrusion that, thanks to a pressure exerted by the bottling machine, engages to the sealing collar that typically wraps around the neck of the bottle.

The use of the aforementioned snap-on caps allows the coupling with the necks of the bottle to be made quicker and less cumbersome, compared to what happens with screw caps. This, moreover, allows considerable cost savings compared to coupling by screwing. In fact, the aforementioned coupling requires that the bottling machine be calibrated from time to time on the basis of the length of the threading as well as the orientation of the cap itself.

As is known, however, the snap coupling technique has some acknowledged drawbacks.

As mentioned, the snap-on caps engage to the sealing collar. Well, given the circular shape of this collar, it happens that the cap when it is coupled to the bottle is left free to rotate around the neck. This has unpleasant consequences on both the functional and aesthetic sides.

In fact, from a functional point of view, the freedom to rotate makes it difficult to open the cap with only one hand, so as to let out the fluid contained inside the bottle.

As for the aesthetic defects, these occur especially in the case of noncircular caps that are coupled to bottles with the same shape. In such cases, in fact, the fact that the cap can rotate around the neck of the bottle means that, both at the time of bottling and during normal use by the user, it can be in a non-symmetrical position with respect to the profile of the bottle to which it is coupled.

To overcome the aforementioned drawbacks, orientation and anti-rotation techniques of the snap-on caps are known which provide for the creation of protruding fins with respect to the neck of the bottle.

However, even these techniques have some recognized drawbacks.

Firstly, the known orientation and anti-rotation fins are created at the time of making the preform of the bottle.

As is known, in fact, the process of making bottles is divided into two steps. The first involves making preforms produced by injection shaping: these are particular bodies with an upper part corresponding to the neck of the bottle and a lower part configured as a hollow cylinder with a closed end part.

The second step, on the other hand, involves making the finished product by blow shaping that, thanks to particularly conformed moulds, allows making bottles of the desired shape.

Well, the first of the two steps is carried out using very expensive machinery and, precisely for this reason, it is usually made by a manufacturer from the one that makes the second step. In fact, in the second step, as anticipated, simpler and less expensive blow moulds are used.

From what has been said, it follows that the creation of the fins during the first step entails a considerable expense of costs.

Moreover, in the event of customization of the aforementioned fins, there is a need to modify the mould used in the preform production step, with a further increase in costs and production times.

And there is more. Typically, the fins mentioned above have a reduced thickness and, therefore, the cap can be rotated by exerting a slight force by the user.

To overcome the inconvenience, it is known to make protrusions by blowing on the upper part of the bottle.

Document US 10 689 168 B2 is an example of making the protrusions by blowing the preform.

This technical solution, however, does not make it possible to overcome the inconvenience of anti-rotation of the cap as typically the protrusions are conformed to come into abutment with thin profiles made on the internal wall of the cap. This, similar to what has been said for the fins protruding from the neck of the bottle, allows the cap to rotate if the user exerts a slight force.

### Presentation of the invention

The object of the present invention is to at least partially overcome the drawbacks highlighted above.

In particular, an object of the present invention is to make available a bottle of any shape provided with a cap also of any shape that allows the cap to be correctly oriented during coupling with the bottle.

Another object of the present invention is to make available a bottle provided with a cap that prevents rotation of the latter during normal use of the bottle.

It follows that the object of the present invention is to make available a bottle provided with a cap that is easily usable with one hand and aesthetically pleasing.

Moreover, another object of the present invention is to make available a bottle provided with a cap comprising an easily customizable orientation and anti-rotation system.

In other words, an object of the present invention is to make available a bottle provided with a cap that allows the above with a cost saving compared to what happens in the prior art.

In fact, a further object of the present invention is to make available a bottle provided with a cap that allows the orientation and anti-rotation system to be customized without the need to modify the machinery necessary for printing the preforms or in any case to modify the preform.

The aforementioned purposes, as well as others that will appear more clearly below, are achieved by a bottle provided with a cap in accordance with the claims that follow, which are to be considered an integral part of the present patent.

In particular, the bottle provided with a cap of the invention, like other plastic bottles of the prior art, is made by blowing and comprises at least one neck having at least one base and at least one collar placed near the base itself. Moreover, the base of the neck itself is a part of the bottle that is shaped by the blowing process and is therefore enlarged with respect to the neck.

As regards the conformation of the cap, according to another aspect of the invention, it has at least one exposed external surface and at least one internal portion conformed so as to snap-fit to the neck.

More in detail, according to a further aspect of the invention, the cap comprises a perimeter wall defining the exposed external surface of the cap itself, as well as an upper wall in which there is at least one through hole.

Advantageously, the presence of the through hole allows the escape of a fluid that can be inserted into the bottle.

Yet, according to another aspect of the invention, the internal portion of the cap comprises an internal surface of the perimeter wall and an annular body protruding from the upper wall towards the inside of the cap, conformed so as to achieve, in fact, the snap coupling with the neck.

Advantageously, the particular conformation of the internal portion described above allows the cap of the invention to be used with bottle necks that can also accommodate screw caps as they are provided with special threadings.

Still advantageously, such conformation allows to have a versatile cap.

Moreover, advantageously, this allows cost savings as there is no need to make *ad hoc* bottles.

According to a further aspect of the invention, the bottle comprises a plurality of shapings placed on the base and a plurality of counter-shapings made on the internal portion of the cap.

In particular, according to another aspect of the invention, the shapings and the counter-shapings are conformed so as to come into abutment against each other and allow a centring of the cap.

Advantageously, this allows the cap to be correctly oriented at the time of bottling and therefore, still advantageously, to obtain a symmetrical coupling between cap and bottle.

Moreover, still advantageously, the presence of shapings and counter-shapings conformed in such a way as to come into abutment against each other makes it possible to avoid rotation of the cap when it is coupled to the bottle.

Still advantageously, the above allows the bottle to be used with only one hand.

According to another aspect of the invention, the shapings placed on the base of the neck of the bottle are made, like the latter, by blowing.

Advantageously, the fact that the shapings are placed at the base of the neck of the bottle allows them to be made more easily than what happens in the prior art.

Moreover, still advantageously, the making of the shapings by blowing allows a considerable cost saving compared to what happens in the prior art.

In fact, in order to make the shapings, it is not necessary, in the bottle of the invention, to modify the mould of the preforms used in the first step of making the bottles. On the contrary, it will be sufficient to modify the mould inside which the preform is inserted to proceed with the blowing that allows the shaping thereof.

It follows, still advantageously, that the above allows to easily customize the shapings. In fact, once again, it will be sufficient to modify the mould used in the second step of making the bottles, resulting, once again, in further savings of money and time.

In detail of the conformation of the shapings and counter-shapings, it can be observed that, according to a further aspect of the invention, the plurality of shapings and counter-shapings comprises material recesses made on the annular body adapted to receive protrusions emerging from the base therein.

### Brief description of the drawings

Further characteristics and advantages of the invention will become more apparent in the light of the detailed description of two preferred, but not exclusive, embodiments of a bottle provided with a cap according to the invention, illustrated by way of non-limiting example with the aid of the attached tables of drawings in which:

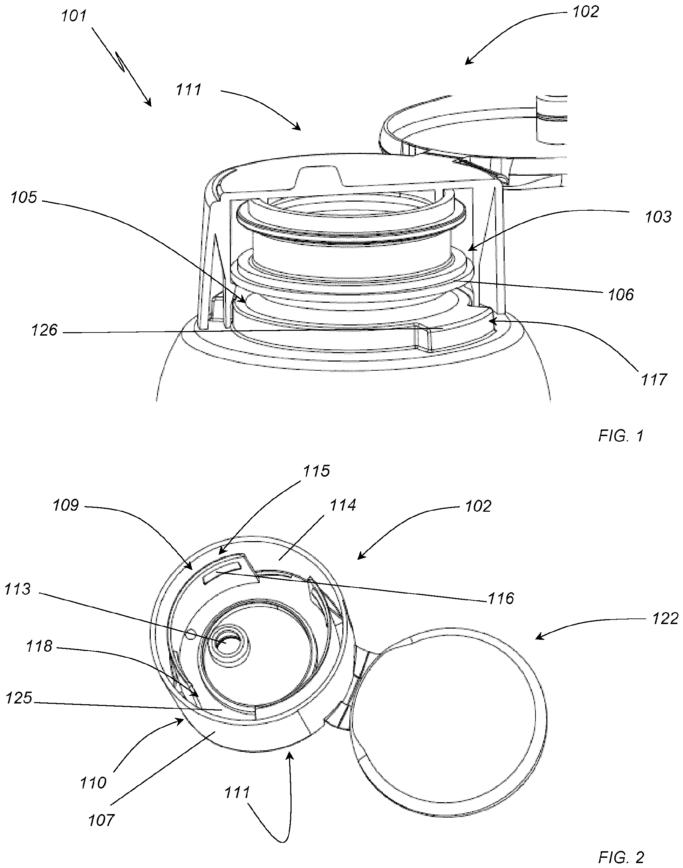

FIG. 1 represents a portion of a bottle provided with a cap according to the invention in partially sectioned view;

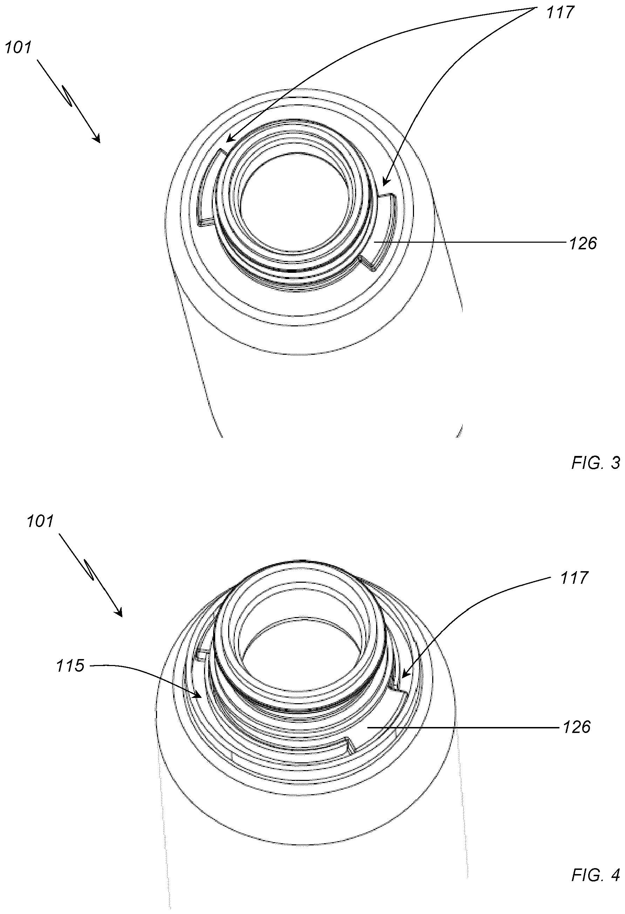

FIGS. 2 and 3 represent details of the bottle provided with a cap of FIG. 1;
FIG. 4 represents a portion of the bottle provided with a cap of FIG. 1 in a different partially sectioned view.

### Detailed description of some preferred embodiments

With reference to the cited figures, a bottle **101** provided with a cap **102** is described.

It, like other plastic bottles of the prior art, is made (shaped) by blowing and comprises a neck **103** having a base **105** and a collar **106** placed near the base **105** itself. Moreover, the same base **105** of the neck **103** is a part of the bottle **101** shaped by the blowing process and is therefore enlarged with respect to the neck **103.**

As regards the conformation of the cap **102,** according to one aspect of the invention, it has an exposed external surface **107** and an internal portion **109** conformed so as to snap-fit to the neck **103.**

More in detail, according to a further aspect of the invention, the cap **102** comprises a perimeter wall **110** defining the exposed external surface **107** of the cap **102** itself as well as an upper wall **111** in which there is a through hole **113.**

Advantageously, the presence of the through hole **113** allows the escape of a fluid that can be inserted in the bottle **101.**

Yet, according to another aspect of the invention, the internal portion **109** of the cap **102** comprises an internal surface **114** of the perimeter wall **110** and an annular body **115** protruding from the upper wall **111** towards the inside of the cap **102.** In particular, the annular body **115** is conformed so as to realize the snap coupling with the neck **103.**

More in detail, according to a further aspect of the invention, the annular body **115** comprises a plurality of protruding elements **116** conformed to come into abutment with the collar **106** of the neck **103** of the bottle **101.** In particular, the protruding elements **116** are conformed so that when the bottling machine exerts pressure on the cap **102,** they slide past the collar **106** and, then, are blocked under it.

Advantageously, the above allows the aforementioned snap coupling to be realized.

Still advantageously, the particular conformation of the internal portion **109** described above allows the cap **102** of the invention to be used also with bottle necks that are conformed to accommodate screw caps as they are provided with special threadings.

Still advantageously, such conformation allows to have a versatile cap **102.**

Moreover, advantageously, this allows cost savings as there is no need to create *ad hoc* bottles.

And there is more. Still advantageously, the conformed of the protruding elements **116** also makes it possible to prevent the release of the cap **102** from the bottle **101.**

From the above it is evident that the number of protruding elements **116** should not be considered limiting for different embodiments of the invention according to which, for example, the annular body comprises a single protruding element.

According to another aspect of the invention, the bottle **101** comprises a plurality of shapings **117** made on the base **105** and a plurality of counter-shapings **118** made on the internal portion **109** of the cap **102.**

In particular, the shaping **117** and the counter-shaping **118** are conformed so as to come into abutment against each other and allow a centring of the cap **102.**

Advantageously, the presence of the shapings **117** and of the counter-shapings **118** allows the orientation of the cap **102** at the time of coupling with the bottle **101** of the invention.

And there is more. Still advantageously, the presence of the shapings **117** and of the counter-shapings **118** makes it possible to avoid rotation of the cap **102** while it is coupled to the bottle **101.**

It follows, advantageously, that the above allows the bottle **101** of the invention to be easily used with just one hand.

According to a further aspect of the invention, also the shapings **117,** like the bottle **101,** are made by blowing. This is allowed by the fact that they can be found on the base **105** of the neck **103,** i.e. a part of the bottle **101** subject to shaping by blowing the preform into a special mould.

Advantageously, the making of the **117** shapings by blowing allows a considerable cost saving compared to what happens with the making of the orientation and anti-rotation elements of the prior art.

As mentioned above, in fact, the process of making bottles obtained by blowing involves two steps: the first in which a customized preform is created by means of very expensive machinery and the second in which the preform is inserted into a mould and air is blown into it so that it assumes the desired shape.

Well, the making of the shapings **117** in the second step allows, as mentioned, a cost saving as it is sufficient to adapt the mould inside which the preform is housed to make the bottle **101,** the whole by using a standard preform and not customized. In this sense, the present invention is well suited to preforms obtained by injection machines.

Moreover, this allows the shape of the shapings **117** to be easily customized according to the user's needs.

Still advantageously, the making of the shapings **117** by blowing also allows a considerable saving of time in the making of the same compared to what happens in the prior art where the orientation and anti-rotation elements also involve parts of the bottle not subject to shaping by blowing and must therefore be made during the step of making the preforms.

As mentioned above, with regard to the conformation of the shapings **117** and of the counter-shapings **118,** it can be observed that according to another aspect of the invention they comprise material recesses **125** made on the annular body **115** and protrusions **126** emerging from the base **105.** In more detail, the material recesses **125** are adapted to receive the aforementioned protrusions **126** therein.

Advantageously, the presence of the protrusions **126** and of the respective material recesses **125** allows the cap **102** to be centred on the neck **103** of the bottle **101** and therefore, still advantageously, to orient the cap **102** on the bottle **101** itself.

Moreover, still advantageously, the protrusions **126** and the material recesses **125** are conformed to come into abutment one on top of the other.

The above advantageously prevents the cap **102** from being able to rotate around the neck **103** of the bottle **101** while it is coupled to the latter.

It follows, still advantageously, that the above allows to easily use the bottle **101** even with one hand. As is known, in fact, typically the cap **102** of the snap bottles **101** is provided with a closing element **122** of the through hole **113.** The closing element **122** allows, once opened, to let out the fluid contained inside the bottle **101.**

It follows that, since the protrusions **126** and the material recesses **125** described above prevent rotation of the cap **102** when coupled to the bottle **101** of the invention, the user can easily open the closing element **122** with only one hand.

And there is more. As is evident from the figures, obviously the material recesses **125** made on the annular body **115** alternate with portions of material of the annular body **115** itself. This conformation of the portions of material of the annular body **115** makes them have an extended body and mechanically particularly resistant to stresses. It follows, advantageously, that this conformation allows to zero the risk of anti-rotation of the cap **102** once coupled to the bottle **101** compared to what occurs in the state of the art previously described, even in the face of a forcing by the user who tries to rotate the cap **101.**

Operationally, the bottle **101** of the invention is made through a method that involves a first step of creating a preform and a subsequent or contextual step of making a mould conformed to also obtain the shapings **117** on the base **105** of the neck **103** of the bottle **101.**

This step advantageously allows the shapings **117** to be created by blowing and therefore, still advantageously, allows them to be customized as necessary simply by modifying the aforementioned mould.

Moreover, still advantageously, the above allows a considerable cost saving compared to what happens in the prior art.

Following the step of making the mould, there is a step of inserting the preform into the mould itself, as well as a subsequent step of blowing hot air into the preform.

In this way, advantageously, the preform takes the shape of the bottle **101** with the relative shapings **117** made on the base **105** of the neck **103.**

At this point, the step of extracting the bottle **101** from the mould is therefore possible.

After the extraction step there is a step of orientation of the cap **102** on the neck **103** by interlocking between the shapings **117** and the counter-shapings **118.**

Advantageously, the above allows to orient the cap **102** on the neck **103** of the bottle **101.**

With the shapings **117** and the counter-shapings **118** correctly oriented, it is therefore possible to couple the cap **102** with the bottle **101** by snap-fitting the protrusions **116** under the collar **106.**

As mentioned, this advantageously allows to prevent the detachment of the cap **102** from the bottle **101** once they are coupled.

Moreover, still advantageously, the presence of the shapings **117** and of the counter-shapings **118** makes it possible to avoid rotation of the cap **102** while it is coupled to the bottle **101.**

In light of the foregoing, it is understood that the bottle provided with a cap of the invention achieves all the intended purposes.

In particular, the bottle provided with a cap of the invention allows the cap to be correctly oriented during the step of coupling with the bottle.

Moreover, it prevents the cap from rotating during normal use of the bottle.

It follows that, the bottle provided with a cap of the invention is easily usable with one hand and aesthetically pleasing.

In addition, the bottle provided with a cap comprises an easily customizable orientation and anti-rotation system.

In other words, it allows the above with a cost saving compared to what happens in the prior art.

In fact, the bottle provided with a cap of the invention allows the orientation and anti-rotation system to be customized without the need to modify the machinery necessary for printing the preforms.

The invention is susceptible to numerous modifications and variations, all falling within the appended claims. All the details may be replaced by other technically equivalent elements, and the materials may be different depending on the needs, without departing from the scope of protection of the invention defined by the appended claims.

## Claims

1. A bottle provided with a cap (**102**) and comprising at least one neck (**103**) having at least one base (**105)** and at least one collar (**106**) placed near said at least one base (**105**), said cap (**102**) having at least one exposed external surface (**107**) and at least one internal portion (**109**) conformed so as to snap-fit to said at least one neck (**103**),
said one bottle (**101**) being made by blowing and said at least one base (**105**) being enlarged with respect to said neck (**103**) by said blowing, said bottle (**101**) being **characterized by** comprising:
- a plurality of shapings (**117**) placed on said at least one base (**105**), said shapings (**117**) being made by said blowing;
- a plurality of counter-shapings (**118**) made on said at least one internal portion (**109**) of said cap (**102**),
said shapings (**117**) and counter-shapings (**118**) being conformed so as to come into abutment against each other and allow a centring of said at least one cap (**102**),
said cap (**102**) comprising:
- an upper wall (**111**) in which there is at least one through hole (**113**) to allow the escape of a fluid that can be inserted in said bottle (**101**);
- a perimeter wall (**110**) defining said exposed external surface (**107**) of said cap (**102**),
said internal portion (**109**) of said cap (**102**) comprising:
- an internal surface (**114**) of said perimeter wall (**110**);
- an annular body (**115**) protruding from said upper wall (**111**) of said cap (**102**) towards the inside of said cap (**102**) and conformed so as to realize said snap coupling to said at least one neck (**103**),
said plurality of shapings (**117**) and counter-shapings (**118**) comprising material recesses (**125**) adapted to receive protrusions (**126**) emerging from said at least one base (**105**) therein, said material recesses (**125**) being made on said annular body (**115**).

2. Bottle according to claim 1, **characterized in that** said annular body (**115**) comprises one or more protruding elements (**116**) conformed to come into abutment with said collar (106) of said neck (103) of said bottle (101) so as to realize said snap coupling.

3. Bottle according to claim 1 or 2, **characterized in that** said cap (102) comprises a closing element (122) at least of said at least one through hole (113) of said upper wall (111).

4. A method for making a bottle (101) provided with a cap (102) according to one or more of the preceding claims, **characterized in that** it comprises the following steps:
- creating at least one preform;
- making at least one mould conformed to obtain said plurality of shapings (**117**) on said at least one base (**105**) of said at least one neck (**103**) of said bottle (**101**);
- inserting said at least one preform into said at least one mould;
- blowing hot air into said at least one preform;
- extracting said bottle (**101**) from said at least one mould;
- orienting said cap (**102**) on said at least one neck (**103**) by interlocking between said plurality of shapings (**117**) and said plurality of counter-shapings (**118**);
- coupling said cap (**102**) to said bottle (**101**).
